# EUROPEAN PATENT APPLICATION

(11) **EP 4 518 045 A2**
(43) Date of publication of application: **05.03.2025**
(21) Application number: 25152891.5
(22) Date of filing: 14.12.2022
(51) Int. Cl.: H01R 13/629

(54) **ACTUATION DEVICE FOR A CONNECTOR**

(30) Priority: 22.12.2021 EP 21216947
(62) Divisional of application: 22840029.7
(71) Applicant: Stäubli Electrical Connectors AG, 4123 Allschwil (CH)
(72) Inventor: CHALIGNÉ, Mathieu, 68480 Vieux-Ferrette (FR); DELORENZI, Louis, 68740 Blodelsheim (FR); FICHTER, Loic, 68610 Lautenbach (FR); JUND, Olivier, 68440 Schlierbach (FR)
(74) Representative: Frischknecht, Harry Ralph

(57) **Abstract**

Actuation device (1) for a connector (2) comprising
a guide structure (3) with at least one guide rail (4) extending along a rail axis (R), and
a carriage device (5) with a support element (6), at least one sliding structure (7) that is mounted to the support element (6), a pivot unit (8) that is mounted to the support element (6) and an arm (9) that is mounted to the pivot unit (8) such that the arm (9) is supported pivotable relative to the support element (6) by means of the pivot unit (8),
wherein the carriage device (5) is beared on the at least one guide rail (4) by said at least one sliding structure (7),
wherein the carrier device (5) is moveable between an initial position and a connection position,
wherein the at least one guide rail (4) has an upper guide surface (4a), a lower guide surface (4b) and a lateral guide surface (4c), and
wherein the at least one sliding structure (7) comprises at least three wheels (7a, 7b, 7c) or exactly three wheels (7a, 7b, 7c), wherein an upper wheel (7a) of said wheels (7a, 7b, 7c) is in contact with the upper guide surface (4a), a lower wheel (7b) of said wheels (7a, 7b, 7c) is in contact with the lower guide surface (4b) and a lateral wheel (7c) of said wheels (7a, 7b, 7c) is in contact with the lateral guide surface (4c).

## Description

### TECHNICAL FIELD

The present invention relates to an actuation device for a connector according to the preamble of claim 1 and a connection system according to the preamble of claim 14.

### PRIOR ART

From EP 2 393 165 a charging connector has been disclosed. Such a connector can be used for example in the field of electrical mobility in order to charge batteries of a vehicle. According to EP 2 393 165 it is possible to compensate a slight angular misalignment between the connector and the receiving opening in which the connector shall extend.

WO 2016/162364 A1 discloses an advanced actuation device with which very good results have been achieved. US 2011/066515 and WO 2021/084388 show further devices.

### SUMMARY OF THE INVENTION

Starting from this prior art it is an object of the present invention to provide an actuation device for a connector which has enhanced movement properties.

Starting from this prior art it is an object of the present invention to provide an actuation device for a connector which has enhanced resetting properties during use. This object is solved by claim 1. Therefore an actuation device for a connector comprises a guide structure with at least one guide rail extending along a rail axis and a carriage device with a support element, at least one sliding structure that is mounted to the support element, a pivot unit that is mounted to the support element and an arm that is mounted to the pivot unit such that the arm is supported pivotable relative to the support element by means of the pivot unit. The carriage device is beared on the at least one guide rail by said at least one sliding structure. The carrier device is moveable between an initial position and a connection position. The pivot unit comprises a first pivot axle allowing a pivot movement around a first axis and a second pivot axle allowing a pivot movement around a second axis, wherein said first axis and said second axis are preferably perpendicular to each other. The actuation device further comprises a resetting unit which is configured to maintain the arm in an initial position. The resetting unit comprises at least one gas spring which is arranged such that a resetting force is applicable of the arm in order to maintain the arm in its initial position.

The use of the gas spring is particularly advantageous as it provides a continuous resetting force of the arm.

In the following preferred embodiments are described which are applicable to both of the above mentioned actuation devices.

The arm extends along an arm axis. In the initial position the arm axis preferably parallel to rail axis. The arm axis is arranged at a distance to the rail axis. In particular, the arm axis is located above the rail axis. Preferably the arm axis is located above a plane that extends through the rail axis and lies in the use position in the horizontal. Alternatively, the arm axis is located above a plane that extends through the rail axes of two guide rails.

The arm can be moved from an initial position in which the connector is not connected to said external device to a connection position in which the arm is moved towards an external device, such as a car or a bus or a ship, in order to establish an electrical contact with the external device via the connector. The actuation device can also be part of the car or the bus. The arm axis is in the initial position parallel to the rail axis. In the connection position, the arm axis is pivoted with regard to the longitudinal axis around said pivot unit.

In use, the first pivot axle is preferably perpendicular to the horizontal and the second axis is then parallel to the horizontal. Preferably, the first pivot axle and the second pivot intersect with each other's. Even more preferably, the first pivot axle and the second pivot axle are arranged such that the first axis and the second axis intersect with the arm axis. The first pivot axle can be provided as continuous axle or it can be provided as interrupted axle. The same applies to the second pivot axle.

According to a first preferred variant, the at least one sliding structure is a wheel structure, wherein the sliding portion is a wheel. In other words: The at least one sliding structure or wheel structure, respectively, comprises at least three wheels or exactly three wheels, wherein an upper wheel of said wheels is in contact with the upper guide surface, a lower wheel of said wheels is in contact with the lower guide surface and a lateral wheel of said wheels is in contact with the lateral guide surface.

Preferably, the wheels are arranged such that their middle axes run perpendicular to the rail axis. The middle axis of the upper wheel and the middle axis of the lower wheel lie in a common plane that is oriented perpendicular to the rail axis. The middle axis of the lateral wheel extends also in said plane or with a distance to said plane.

Preferably, the wheels are made of steel or plastic, such as polyamide or a rubber or a rubber composite. Preferably, the wheels comprise a bearing, in particular a ball bearing or a sliding bearing around which the wheel rotates.

According to a second preferred variant, the at least one sliding structure is a sliding bearing, wherein the sliding portion is a sliding surface of the sliding bearing.

Preferably two guide rails or exactly two guide rails are arranged parallel with a fixed distance to each other. Further, at least four of said sliding structures or exactly four of said sliding structures are arranged. Two of said sliding structures is beared on one of said guide rails and two of said sliding structures is beared on the other of said guide rails.

The two guide rails are preferably connected by sleeper elements, which are connected to the guide rail on a surface part of the guide rail that is not in contact with one of said sliding portions or one of said wheels. The sleeper elements can be connected to supporting structures at the location of use of the actuation device.

In other embodiments, it is also possible that only one rail is arranged.

The at least one guide rail has preferably a circular or a rectangular cross section. Other cross-sections are also possible. The at least one guide rail is preferably made of steel or plastic or aluminum.

Preferably, the guide rails are also in connection with a bearing plate that is mounted on the end region of each guide rail. The guide rails are clamped by a clamping section of the bearing plate to the bearing plate.

The sleeper elements are preferably arranged in regular distances with each other. Preferably, a plurality of sleeper elements are arranged.

In a preferred embodiment, the guide rail comprises a flange extending away from the rail element and also in direction of the rail axis, wherein the flange comprises the surface to which the sleeper is connected to said guide rail.

Preferably, the lateral guide surfaces are arranged on the outer side of the guide rails, which outer side is the side that faces away from an intermediate space between said two guide rails. In an alternative variant, the lateral guide surfaces are arranged towards an intermediate space between said two guide rails.

Both variants have the advantage that the carriage device is beared with all degrees of freedom apart from the degrees of freedom in direction of the rail axis.

Preferably, the upper sliding portion or the upper wheel and the lower sliding portion or the lower wheel are mounted to a common mounting element which mounting element extends from the support element and wherein the lateral sliding portion or the lateral wheel is mounted to the same mounting element.

Preferably, the sliding structure is arranged at a bottom side of the support element and the pivot unit as well as the arm are arranged at a top side of the support element.

Preferably, the actuation device further comprises a drive element, which drives the carriage device.

In particular, the drive element drives a drive belt, wherein the drive belt runs parallel to the rail axis and wherein the drive belt is in connection with the carriage device such that the carriage device is driven by the drive element. Preferably, the drive belt is an endless drive belt, wherein in the region of the end of the guide rails a recirculation roller is arranged around which the endless drive element extends.

Other drive structures, such as chains or threads are also feasible.

Preferably, the drive belt is arranged parallel to the guide rail. Preferably, the drive belt is arranged between the guide rails.

Preferably a first alignment element is arranged on the guide structure and in that a second alignment element is arranged on the pivot unit, in particular on the first pivot axle, wherein the second alignment element engages with the first alignment when the carriage device is substantially in its initial position.

With the alignment elements the pivot unit, in particular the first pivot axle, can be aligned to a determined orientation.

Preferably, the first alignment element is arranged next to the guide rail or between two guide rails and wherein the second alignment element extends underneath the support element towards the guide rails such that an engagement with the alignment elements becomes possible.

The second alignment element is preferably mounted to the pivot axle. Preferably, the second alignment element is mounted to an end part of the pivot axle. Preferably, the alignment element extends perpendicular to the middle axis of the pivot axle.

Preferably, the first alignment element comprises a slot extending parallel to the rail axis, wherein the second alignment element engages into the slot.

Preferably, the slot has an insertion section which widens the width of the slot such that the engagement with the second alignment element is enhanced.

Preferably, the first and the second alignment elements comprises alignment surfaces which provided for a contact with each other and which are oriented in direction of the rail axis.

Preferably, a first gas spring of said mentioned gas springs is arranged to act on the arm to provide a resetting force around the first axis and wherein a second gas spring of said mentioned gas springs is arranged to act on the arm to provide a resetting force around the second axis.

Preferably two of said first gas springs are arranged, wherein one of said first gas springs acts to provide a resetting force regarding a first direction around said first axis and wherein the other of said first gas springs acts to provide a resetting force regarding a second direction around said first axis, wherein the first direction is oriented against the second direction.

With such a structure the arm is always balanced in its initial position.

The second gas spring is preferably arranged to support the weight of the arm against its gravity force.

Preferably, the actuation device further comprises at least one chain element which is on one end connected to the guide structure and on another end connected to the carriage device wherein the chain element encompasses an interior space via which cables are guided to the arm.

Preferably the at least one chain element is arranged on the outer side of the two guide rails. Preferably the at least one chain element is guided to the rear side of the carriage device.

Preferably, the at least one guide rail has an upper guide surface, a lower guide surface and a lateral guide surface. The sliding structure comprises at least three sliding portions or exactly three sliding portions, wherein an upper sliding portion of said sliding portions is in contact with the upper guide surface, a lower sliding portion of said sliding portions is in contact with the lower guide surface and a lateral sliding portion of said sliding portions is in contact with the lateral guide surface. This actuation device has the advantage that due to the arrangement of the three sliding portions an enhanced bearing of the carriage device on the bearing structure can be provided. In particular the bearing provides for a bearing structure with regard to at least three degrees of freedom such that not only an advantageous motion along the guide rail but also a good force introduction from the sliding portions into the rails. Such force result from the motion of the arm during a contact situation. In particular, if the contact situation is not stable and is rocking back and forth for example. Such contact situation may occur when the actuation device is used for connectors to charge electric vehicles, such as buses, boats, autonomous guided vehicles, etc..

Furthermore, the life time, which means the number of movements of the carriage device, of the actuation device can be enhanced.

Preferably, the rail axis and the guide rail extends along a longitudinal axis or along a straight axis, respectively.

Preferably, said arm extends along an arm axis, which arm has a front section with a connection interface configured to receive the connector, and a rear section. The rear section of the arm is connected to the pivot unit.

A connection system comprising an actuation device according to the description above and an electrical connector, which is connected to a front section of said arm.

Preferably, the electrical connector comprises a contact section configured to be received by a socket and a deflection section configured to compensate an angular misalignment between the contact section and the socket.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of an actuation device according to one embodiment of the present invention;
- Fig. 2: shows a side view of the actuation device according to figure 1;
- Fig. 3: shows a detailed view of the actuation device according to the previous figures;
- Fig. 4: shows a detailed view of the actuation device according to the previous figures;
- Fig. 5: shows a back view of the actuation device according to the previous figures;
- Fig. 6: shows a detailed view of the actuation device according to the previous figures together with a further detail;
- Fig. 7: shows a detailed view of the guide rails of the actuation device according to the previous figures;
- Fig. 8: shows a detailed view of an alignment element of the actuation device according to the previous figures; and
- Fig. 9: shows a further detailed view of the alignment element the actuation device according to the previous figures.

### DESCRIPTION OF PREFERRED EMBODIMENTS

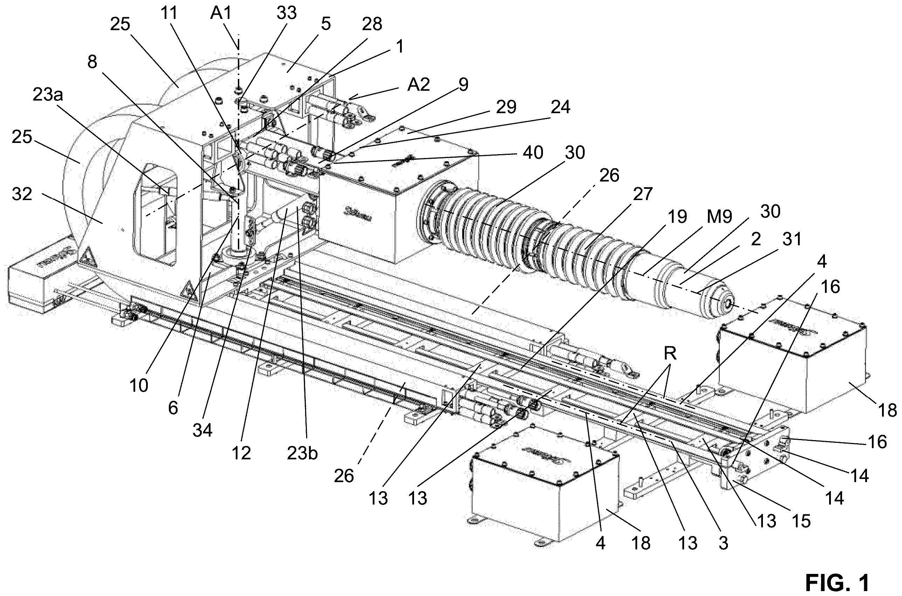

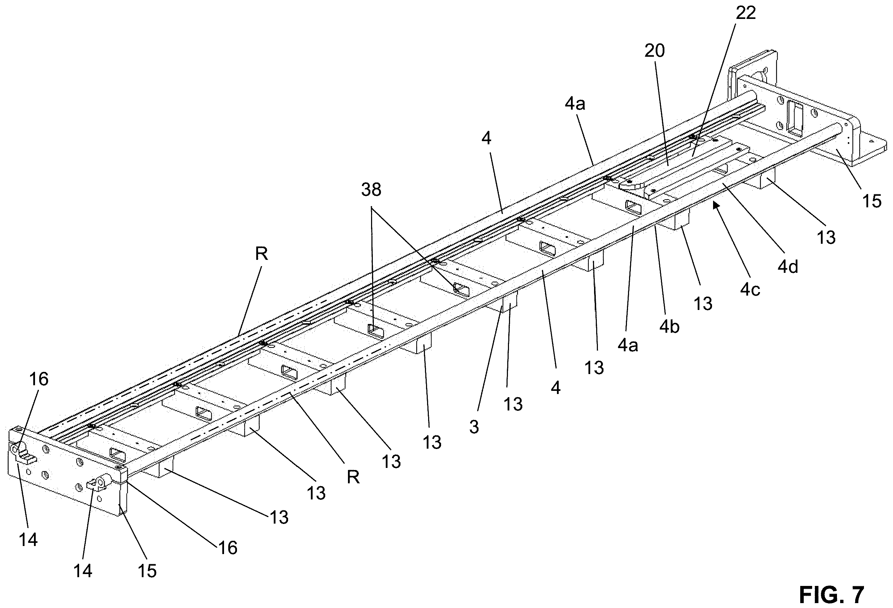

In the figures 1 to 9 a preferred embodiment of the actuation device 1 for a connector 2 is shown. The actuation device 1 comprises a guide structure 3 and a carriage device 5 that is connected to the guide structure 3 in a moveable manner such that the carriage device 5 can be moved from an initial position into a connection position. In the connection position the connector 2 that is connected to the carriage device 5 can be brought in an electrical contact to an external element.

The guide structure 3 comprises at least one guide rail 4. The guide rail 4 extends along a rail axis R. The rail axis R is preferably a straight longitudinal axis.

The carriage device 5 comprises a support element 6, at least one sliding structure 7 that is mounted to the support element 6, a pivot unit 8 that is mounted to the support element 6 and an arm 9 that is mounted to the pivot unit 8 such that the arm 9 is supported pivotable relative to the support element 6 by means of the pivot unit 8. The sliding structure 7 as shown in the figures is a wheel structure having several wheels 7a, 7b, 7c. In other embodiments, the sliding structure can also be a sliding bearing.

The carriage device 5 is beared on the at least one guide rail 4 by said at least one sliding structure or wheel structure 7 such that the carrier device 5 is moveable between an initial position and a connection position in a forward direction and a backward direction.

The arm 9 comprises a free end opposite to the end, which is connected to the pivot unit. The free end comprises a connection interface 40 to which the connector 2 can be connected. In the present embodiment the connector comprises also a box 29 in which electro-technical components can be arranged. The connector 2 comprises also at least one sheath 30 extending around the connector 2. The at least one sheath 30 protects the connector from external influences. On the front end, the connector 2 comprises a cylindrical connection zone 31 which is here covered by a moveable sheath 30. The cylindrical connection zone is provided as an electrical plug which can be connected to a corresponding socket on the external element. The arm 9 extends along an arm axis M9. In the present embodiment the pivot unit 8 comprises a first pivot axle 10 allowing a pivot movement around a first axis A1 and a second pivot axle 11 allowing a pivot movement around a second axis A2. Said first axis A1 and said second axis A2 are preferably perpendicular to each other.

In the present embodiment the actuation device 1 further comprises a resetting unit 12 which is configured to maintain the arm 9 in an initial position. Preferably resetting unit 12 comprises at least one gas spring 23 which is arranged such that a resetting force is applicable of the arm 9 in order to maintain the arm in its initial position. In other embodiments it is also possible to use other elements than the gas spring to provide the resetting force.

From figure 1 it can be seen that the first pivot axle 10 extends from the support 6 and is beared in the support element 6. The support element 6 comprises here also a frame element 32 which is part of the support element 6 or is mounted to the support element 6. The frame element 32 also provides a bearing point 33 for the first axle 10 opposite to bearing point in the support element 6.

The second axle 11 is beared on the first axle 10. Thereby the second axle 11 extends perpendicular to the first axle 10.

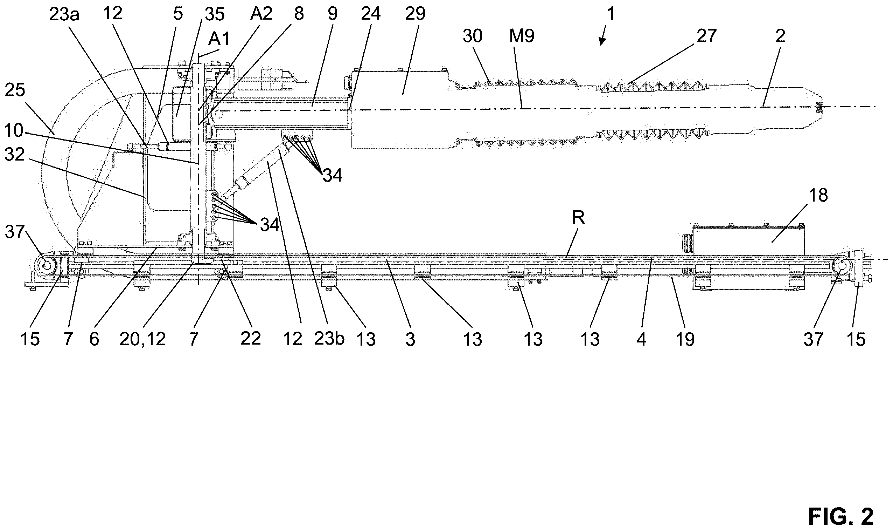

Figure 2 shows a side view of the actuation device 1. In the side view one of the gas springs is visible. This gas spring is designated as second gas spring 23b. The second gas spring 23b is arranged to act on the arm to provide a resetting force around the second axis A2. In particular the second gas spring 23b is arranged to support the weight of the arm 9 against its gravity force. The second gas spring 23b is mounted with one end to the arm 9 and with the other end to the carriage device 5, in particular to the shaft of the first pivot axle 10. There are preferably several connection points 34 on the arm 9 and/or on the first pivot axle 10. In the present embodiment there is only one single second gas spring 23b arranged, but it may also be possible that more than one second gas spring 23b is arranged.

From figure 2 it is also shown that the arm axis M9 runs parallel to the rail axis R. In the use position the arm axis M9 as well as the rail axis R lie preferably in the horizontal. The arm axis M9 is thereby arranged with a distance to the rail axis R. As seen in a direction perpendicular to a plane extending through the two rail axes R, the arm axis M9 is arranged in the middle of the two rail axis R. In other words: The arm 9 extends along an arm axis M9, which arm axis M9 is located above a plane that extends through the rail axis R and lies in the use position in the horizontal; or which arm axis M9 is located above a plane that extends through the rail axes R of two guide rails.

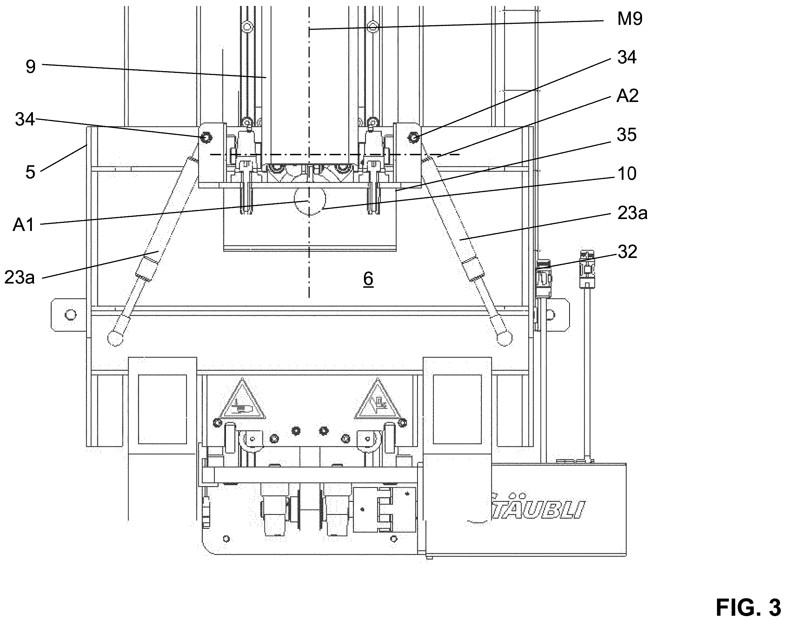

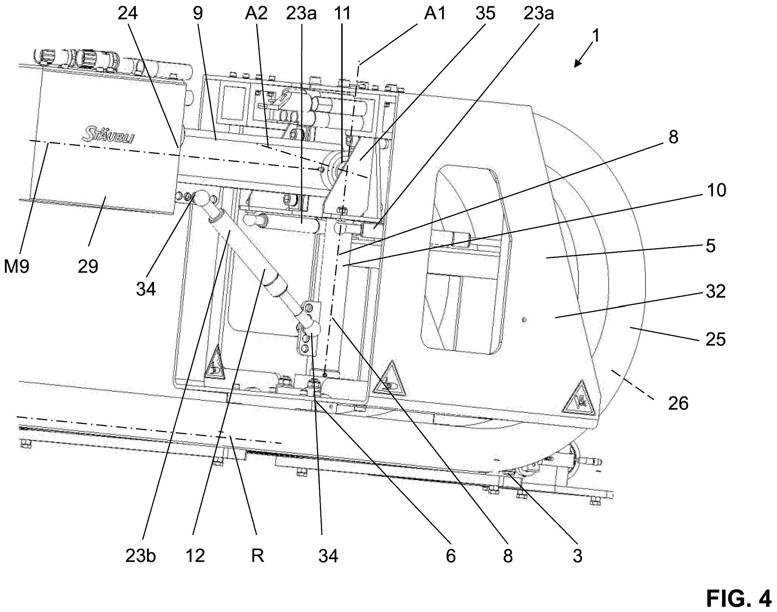

Figures 3 and 4 show views with which the arrangement of a further gas spring will be explained. This gas spring is designated as first gas spring 23a. The first gas spring 23a is arranged to act on the arm 9 to provide a resetting force around the first axis A1. In the present case two of said first gas springs 23a are arranged, wherein one of said first gas springs 23a acts to provide a resetting force regarding a first direction around said first axis A1 and wherein the other of said first gas springs 23a acts to provide a resetting force regarding a second direction around said first axis A1, wherein the first direction is oriented against or opposite the second direction. The gas springs 23a are on the one end connected to the carriage device 5 and on the other end to the pivot unit, here on the first pivot axle 10. The connection points 34 to the first pivot axle 10 are arranged at a distance to the first axis A1. The connection point to the carriage device can be located at various locations. In the present embodiment the connection point is located on the other side of the first axis A1 with regard to the arm 9. Preferably the first gas springs 23a lie with their middle axes in a common plane which plane is preferably parallel to the rail axis R.

Figure 4 also shows that the first pivot axle 10 comprises a bearing structure 35 for the second pivot axle 11. The bearing structure has two side walls 36 in which the second pivot axle 11 are beared. The connection point 34 are arranged on that sidewall.

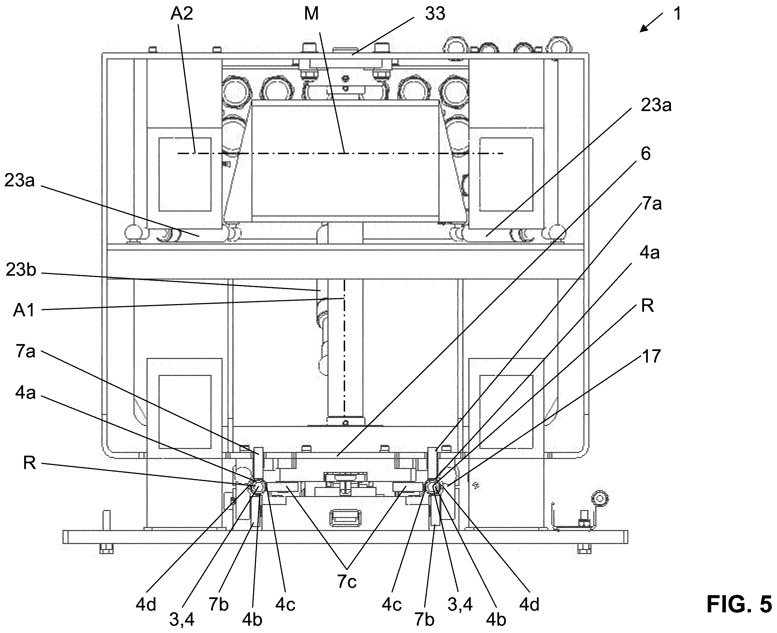

Figures 5 to 7 show the details about the rail structure 3 and the sliding structure, here in the shape as a wheel structure 7, and their interaction.

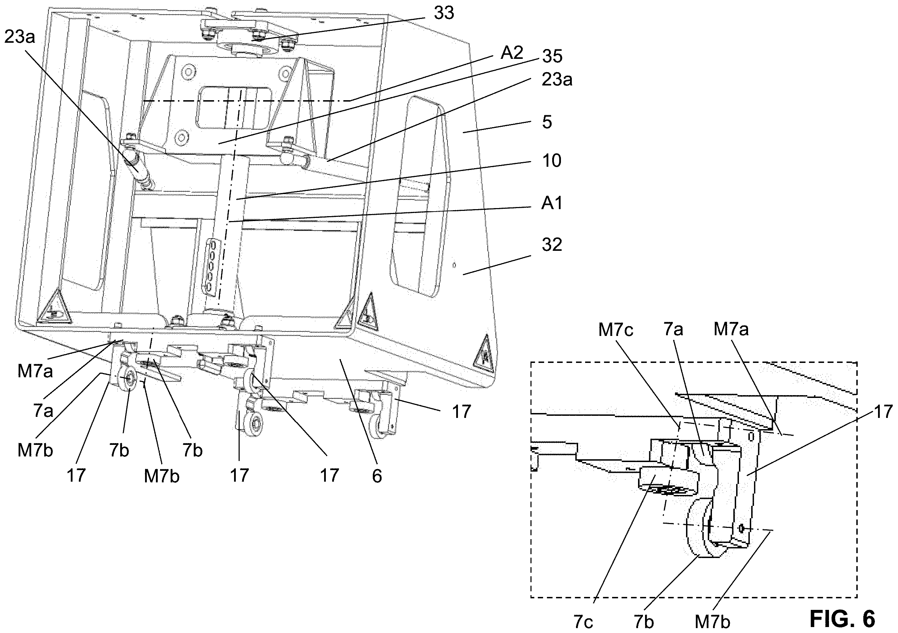

The at least one guide rail 4 has an upper guide surface 4a, a lower guide surface 4b and a lateral guide surface 4c. The at least one sliding structure 7 comprises at least three sliding portions 7a, 7b, 7c or exactly three sliding portions 7a, 7b, 7c, wherein an upper sliding portion 7a of said sliding portions 7a, 7b, 7c is in contact with the upper guide surface 4a, a lower sliding portion 7b of said sliding portions 7a, 7b, 7c is in contact with the lower guide surface 4b and a lateral sliding portion 7c of said sliding portion 7a, 7b, 7c is in contact with the lateral guide surface 4c. As mentioned above, in the figures as shown the at least one sliding structure is a wheel structure. Therefore, the at least one wheel structure 7 comprises at least three wheels 7a, 7b, 7c or exactly three wheels 7a, 7b, 7c. An upper wheel 7a of said wheels 7a, 7b, 7c is in contact with the upper guide surface 4a, a lower wheel 7b of said wheels 7a, 7b, 7c is in contact with the lower guide surface 4b and a lateral wheel 7c of said wheels 7a, 7b, 7c is in contact with the lateral guide surface 4c. As it can be seen in figures 5 and 6 the each of said three wheels 7a, 7b, 7c is arranged in a respective quadrant.

In the present case two guide rails 4 are arranged parallel with a fixed distance to each other. There is an intermediate space between the guide rail 4. The carriage device 5 comprises at least four of said sliding structures or wheel structures 7. The sliding structures or wheel structures 7 are arranged underneath the support element 6. In the embodiment shown there are four sliding structures or wheel structures 7 arranged, wherein two of said sliding structures or wheel structures 7 are beared on one of said guide rails 4 and wherein two of said sliding structures or wheel structures 7 are beared on the other of said guide rails 4.

The two guide rails 4 are connected by a plurality of sleeper elements 13 which are connected to the guide rail 4 on a surface part that is not in contact with one of said sliding portions or wheels 7a, 7b, 7c. The sleeper elements 13 are preferably arranged in regular distances with each other. In the preferred embodiment the guide rail comprises a flange 14 extending away from the guide rail 4 and extending also in direction of the rail axis R, wherein the flange 14 comprises the surface to which the sleeper elements 13 are connected to said guide rail 4.

The guide rails 4 have preferably a circular cross section. The guide rails 4 are preferably made of steel. Other cross sections, such as a rectangular cross-section, or other materials, such as aluminium or plastic, are also possible.

Preferably, the guide rails 4 are also in connection with a bearing plate 15 that is mounted on the end region of each guide rail 4. The guide rails are clamped by clamping section 16 of the bearing plate to the bearing plate.

In the embodiment as shown the lateral guide surfaces 4c are arranged towards the intermediate space between said two guide rails 4. Therefore the lateral sliding portion or the lateral wheel 7c is also arranged in said intermediate space.

The wheels 7a, 7b, 7c are arranged such that their middle axes M7a, M7b, M7c run perpendicular to the rail axis R. The middle axis M7a of the upper wheel 7a and the middle axis M7b of the lower wheel 7b lie in a common plane that is oriented perpendicular to the rail axis R. The middle axis M7c of the lateral wheel 7c extends also in said plane or with a distance to said plane.

In the detailed view of figure 6 it is shown how the wheels are mounted to the support element 6. The upper wheel 7a and the lower wheel 7b are mounted to a common mounting element 17 which mounting element extends from the support element 6. The mounting element 17 extends with one section on the outer side of the guide rail 4. The lateral wheel 7c is mounted to the same mounting element 17.

Preferably, the wheels 7a, 7b, 7c are made of steel or plastic. Preferably, the wheels comprise a bearing around which the wheel rotates.

Preferably, the sliding structure or the wheel structure 7 is arranged at a bottom side of the support element and the pivot unit as well as the arm are arranged at a top side of the support element.

From various figures it can be seen that the actuation device 1 further comprises a drive element 18 and a drive belt 19 which is driven by the drive element 18, wherein the drive belt 19 runs parallel to the rail axis R and wherein the drive belt 19 is in connection with the carriage device 5 such that the carriage device 5 is driven by the drive element 18.

Preferably, the drive belt 19 is a drive belt with two ends that are connected to the carriage device 5. In the region of the end of the guide rails a recirculation roller 37 is arranged around which the endless drive element extends. The drive belt is driven by a motor.

Preferably, the drive belt 19 is arranged parallel to the guide rail 4. Preferably, the drive belt 19 is arranged between the guide rails 4. Each of the sleeper elements 13 have an opening 38 through which the drive belt 19 extends.

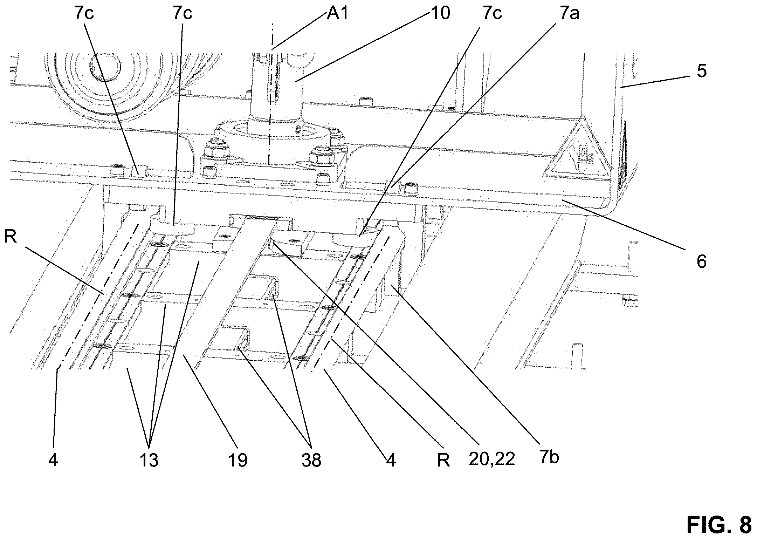

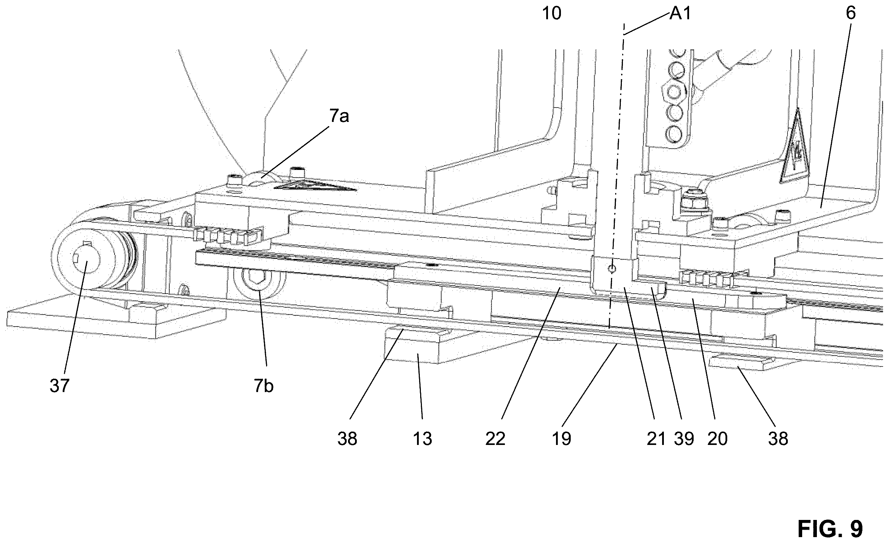

Figures 8 and 9 show that in the preferred embodiment a first alignment element 20 is arranged one the guide structure 3 and a second alignment element 21 is arranged on the first pivot axle 10. The second alignment element 21 engages with the first alignment element 20 when the carriage device 5 is in its initial position.

Preferably, the first alignment element 20 is arranged next to the guide rail 4 or between two guide rails 4. The second alignment element 21 extends underneath the support element 6 towards the guide rails 4 such that an engagement with the alignment elements 20, 21 becomes possible.

In the present embodiment the first alignment element 20 comprises a slot 22 extending parallel to the rail axis R, wherein the second alignment element 21 engages into the slot 22. In the present embodiment the second alignment element 21 extends with an optional alignment section 39 transverse to the first pivot axle 10. Thereby the alignment section 39 has a length as seen transverse to the first pivot axle 10, which is larger than half of the diameter of the pivot axle 10.

Furthermore, the actuation device 1 preferably comprises at least one chain element 25 which is on one end connected to the guide structure and on an other end connected to the carriage device. The chain element 25 encompasses an interior space 26 via which cables are guided to the arm 9.

A connection system comprising an actuation device 1 according to the description above and an electrical connector 2 which is connected to a front section 24 of said arm.

Preferably, the electrical connector 2 comprises a contact zone 31 configured to be received by a socket and a deflection section 27 configured to compensate an angular misalignment between the contact zone 31 and the socket.

### LIST OF REFERENCE SIGNS

| | | | |
|---|---|---|---|
| 1 | actuation device | 25 | chain element |
| 2 | connector | 26 | interior space |
| 3 | guide structure | 27 | deflection section |
| 4 | guide rail | 28 | rear section |
| 4a | upper guide surface | 29 | box |
| 4b | lower guide surface | 30 | sheath |
| 4c | lateral guide surface | 31 | connection zone |
| 4d | outer side | 32 | frame element |
| 5 | carriage device | 33 | bearing point |
| 6 | support element | 34 | connection point |
| 7 | wheel structure | 35 | bearing structure |
| 7a | upper wheel | 36 | sidewall |
| 7b | lower wheel | 37 | recirculation roller |
| 7c | lateral wheel | 38 | opening |
| 8 | pivot unit | 39 | alignment section |
| 9 | arm | 40 | connection interface |
| 10 | first pivot axle | | |
| 11 | second pivot axle | A1 | first axis |
| 12 | resetting unit | A2 | second axis |
| 13 | sleeper element | R | rail axis |
| 14 | flange | M7a | middle axis upper wheel |
| 15 | bearing plate | M7b | middle axis lower wheel |
| 16 | clamping section | M7c | middle axis lateral wheel |
| 17 | mounting element | M9 | arm axis |
| 18 | drive element | | |
| 19 | drive belt | | |
| 20 | first alignment element | | |
| 21 | second alignment element | | |
| 22 | slot | | |
| 23 | gas spring | | |
| 23a | first gas sping | | |
| 23b | second gas spring | | |
| 24 | front section | | |

## Claims

1. Actuation device (1) for a connector (2) comprising
a guide structure (3) with at least one guide rail (4) extending along a rail axis (R), and
a carriage device (5) with a support element (6), at least one sliding structure (7) that is mounted to the support element (6), a pivot unit (8) that is mounted to the support element (6) and an arm (9) that is mounted to the pivot unit (8) such that the arm (9) is supported pivotable relative to the support element (6) by means of the pivot unit (8),
wherein the carriage device (5) is beared on the at least one guide rail (4) by said at least one sliding structure (7),
wherein the carrier device (5) is moveable between an initial position and a connection position,
wherein the pivot unit (8) comprises a first pivot axle (10) allowing a pivot movement (P) around a first axis (A1) and a second pivot axle (11) allowing a pivot movement (P') around a second axis (A2), wherein said first axis (A1) and said second axis (A2) are preferably perpendicular to each other,
wherein the actuation device (1) further comprises a resetting unit (12) which is configured to maintain the arm (9) in an initial position, and
wherein the resetting unit (12) comprises at least one gas spring (23) which is arranged such that a resetting force is applicable of the arm (9) in order to maintain the arm in its initial position.

2. Actuation device (1) according to claim 1, **characterized in that** in the initial position the arm (9) extends along an arm axis (M9), which arm axis (M9) is located at a distance to the rail axis (R), in particular above the rail axis (R); or which arm axis (M9) is located above a plane that extends through the rail axes (R) of two guide rails.

3. Actuation device (1) according to one of the preceding claims, **characterized in that** the at least one sliding structure (7) is a wheel structure, wherein the sliding portion is a wheel; or **in that** the at least one sliding structure (7) is a sliding bearing, wherein the sliding portion is a sliding surface of the sliding bearing.

4. Actuation device (1) according to claim 3, **characterized in that** the wheels (7a, 7b, 7c) are arranged such that their middle axes (M7a, M7b, M7c) run perpendicular to the rail axis (R), wherein the middle axis (M7a) of the upper wheel (7a) and the middle axis (M7b) of the lower wheel (7b) preferably lie in a common plane that is oriented perpendicular to the rail axis (R) and wherein the middle axis (M7c) of the lateral wheel (7c) extends also in said plane or with a distance to said plane.

5. Actuation device (1) according to one of the preceding claims, **characterized in that** two guide rails (4) or exactly two guide rails (4) are arranged parallel with a fixed distance to each other and **in that** at least four of said sliding structures (7) or exactly four of said sliding structures (7) are arranged,
wherein two of said sliding structures (7) are beared on one of said guide rails (4) and wherein two of said sliding structures (7) are beared on the other of said guide rails (4), and
wherein the two guide rails (4) are preferably connected by sleeper elements (13) which are connected to the guide rail (4) on a surface part that is not in contact with one of said sliding portions (7a, 7b, 7c).

6. Actuation device (1) according to claim 5, **characterized in that** the lateral guide surfaces (4c) are arranged on the outer side (4d) of the guide rails (4), which outer side (4d) is the side that faces away from an intermediate space between said two guide rails (4);
or **in that** the lateral guide surfaces (4c) are arranged towards an intermediate space between said two guide rails (4).

7. Actuation device (1) according to any one of the previous claims, **characterized**
**in that** the upper sliding portion (7a) and the lower sliding portion (7b) are mounted to a common mounting element (17) which mounting element extends from the support element (6) and in that the lateral sliding portion (7c) is mounted to the same mounting element (17); and/or
**in that** the actuation device (1) further comprises a drive element (18) which drives the carriage device, which drive element (18) preferably drives a drive belt (19), wherein the drive belt runs parallel to the rail axis (R) and wherein the drive belt (19) is in connection with the carriage device (5) such that the carriage device (5) is driven by the drive element (18).

8. Actuation device (1) according to any one of the previous claims, **characterized in that** a first alignment element (20) is arranged on the guide structure and **in that** a second alignment element (21) is arranged on the pivot unit wherein the second alignment element (21) engages with the first alignment element (20) when the carriage device (5) is substantially in its initial position.

9. Actuation device (1) according to claim 8,
wherein the second alignment element (21) is arranged on the first pivot axle (10) and wherein the second alignment element (21) extends with an optional alignment section (39) transverse to the first pivot axle (10); and/or
wherein the first alignment element (20) is arranged next to the guide rail (4) or between two guide rails (4) and wherein the second alignment element (21) extends underneath the support element (6) towards the guide rails (4) such that an engagement with the alignment elements (20, 21) becomes possible; and/or
wherein the first alignment element (20) comprises a slot (22) extending parallel to the rail axis (R), wherein the second alignment element (21) engages into the slot (22), wherein the slot preferably has an insertion section which widens the width of the slot (22) such that the engagement with the second alignment element (21) is enhanced.

10. Actuation device (1) according to one of the preceding claims 1 to 9, **characterized in that** a first gas spring (23a) is arranged to act on the arm to provide a resetting force around the first axis (A1) and **in that** a second gas spring (23b) is arranged to act on the arm to provide a resetting force around the second axis (A2).

11. Actuation device (1) according to claim 10, **characterized**
**in that** two of said first gas springs (23a) are arranged, wherein one of said first gas springs (23a) acts to provide a resetting force regarding a first direction around said first axis (A1) and wherein the other of said first gas springs (23a) acts to provide a resetting force regarding a second direction around said first axis (A1), wherein the first direction is oriented against the second direction; or
**in that** the second gas spring (23b) is arranged to support the weight of the arm (9) against its gravity force.

12. Actuation device (1) according to one of the preceding claims, **characterized in that** the actuation device (1) further comprises at least one chain element (25) which is on one end connected to the guide structure and on an other end connected to the carriage device wherein the chain element (25) encompasses an interior space (26) via which cables are guided to the arm (9).

13. Actuation device (1) according to one of the preceding claims, **characterized in that** the at least one guide rail (4) has an upper guide surface (4a), a lower guide surface (4b) and a lateral guide surface (4c), and
**in that** the at least one sliding structure (7) comprises at least three sliding portions (7a, 7b, 7c) or exactly three sliding portions (7a, 7b, 7c), wherein an upper sliding portion (7a) of said sliding portions (7a, 7b, 7c) is in contact with the upper guide surface (4a), a lower sliding portion (7b) of said sliding portions (7a, 7b, 7c) is in contact with the lower guide surface (4b) and a lateral sliding portion (7c) of said sliding portion (7a, 7b, 7c) is in contact with the lateral guide surface (4c).

14. Connection system comprising an actuation device (1) according to one of the preceding claims and an electrical connector (2) which is connected to a front section (24) of said arm.

15. Connection system according to claim 14, **characterized in that** the electrical connector (2) comprises a contact section (26) configured to be received by a socket and a deflection section (27) configured to compensate an angular misalignment between the contact section (26) and the socket.
